# EUROPÄISCHE PATENTSCHRIFT

(11) **EP 3 309 938 B1**
(45) Veröffentlichungstag und Bekanntmachung des Hinweises auf die Patenterteilung: **02.12.2020**
(21) Anmeldenummer: 16193202.5
(22) Anmeldetag: 11.10.2016
(51) Int. Cl.: H02K 15/085

(54) **VERFAHREN ZUR BEWICKLUNG DER WICKELZÄHNE UND WICKELHILFSEINRICHTUNG**
METHOD FOR WINDING WOUND SPROCKETS AND WINDING ASSISTANCE DEVICE
PROCÉDÉ DE BOBINAGE DES DENTS D'ENROULEMENT ET DISPOSITIF D'AIDE À L'ENROULEMENT

(43) Veröffentlichungstag der Anmeldung: 18.04.2018
(73) Patentinhaber: Aumann Espelkamp GmbH, 32339 Espelkamp (DE)
(72) Erfinder: JASTRZEMBSKI, Jan-Peter, 97082 Würzburg (DE); WENZEL, Matthias, 32339 Espelkamp (DE); SELL-LE BANC, Florian, 32339 Espelkamp (DE)
(74) Vertreter: Bittner, Thomas L.

(56) Entgegenhaltungen:
- CN-U- 201 975 951
- JP-A- S5 365 903
- JP-A- 2002 034 191
- US-A- 3 184 173
- US-A1- 2008 201 935
- STENZEL P ET AL: "Needle winding for distributed round-wire-windings without the use of insulation disks", 2014 4TH INTERNATIONAL ELECTRIC DRIVES PRODUCTION CONFERENCE (EDPC), IEEE, 30 September 2014 (2014-09-30), pages 1-7, XP032704472, DOI: 10.1109/EDPC.2014.6984387 ISBN: 978-1-4799-5008-9 [retrieved on 2014-12-12]

## Beschreibung

Die Erfindung betrifft ein Verfahren zur Bewicklung der Wickelzähne eines Rotors oder Stators einer Elektromaschine und eine Wickelhilfseinrichtung, insbesondere zur Verwendung in einem solchen Verfahren.

Beim Bewickeln von innengenuteten Blechpaketen, wie sie für Rotoren oder Statoren eingesetzt werden, werden zwei unterschiedliche Techniken eingesetzt. US 2008 201 935 A1 offenbart eine Version der Wickelmattentechnik. In Vorfeld werden die Drähte zu Wickelmatten gebogen und zusammengefügt. Dabei werden sie für Außenrotoren oder -statoren in Schablonen eingelegt und als Komplettwicklung mit den Schablonen in den Innenraum des Rotors oder Stators eingeführt, wobei ein Teil der Wicklungen in die Nuten des Rotors oder Stators zu liegen kommt. Anschließend wird die Schablone entsprechend der Wicklungsvorgabe verdreht und der zweite Teil der Wicklungen anschließend aus der Schablone in die entsprechenden Nuten des Rotors oder Stators eingeführt. Um bei dem Verdrehen ein zu starkes Abknicken der Drähte, was zu Beschädigungen führen kann, zu vermeiden, können auf den einzelnen Zähnen Biegehilfen angebracht werden. Diese verhindern ein starkes Knicken der Drähte an den oft scharfen Kanten der Polzähne. Anschließend werden die Biegehilfen wieder entfernt. Auf derartige Biegehilfen kann verzichtet werden, wenn vor dem Einlegen der Wickelmatten in den Rotor oder Stator die Verschränkung erfolgt, so dass mit der Schablone ein einfaches Einlegen der Wicklungen in den Rotor oder Stator erfolgt.

Bevorzugt wird oft die Nadelwickeltechnik eingesetzt. Dabei fährt der Nadelträger durch das Blechpaket und verlegt in der Bewegung den Draht in der jeweiligen Nut. Auf den Stirnflächen des Blechpakets werden zumeist Kunststoffendkappen eingesetzt, die zur Drahtverlegung im Wickelkopf dienen und die Spulenkörper vom Blechpaket isolieren. Dabei müssen die Kunststoffendkappen die Kräfte des Drahtes aufnehmen und sind dementsprechend mit den nötigen Wandstärken ausgestattet, so dass derart gewickelte Elektromaschinen einen großen Bauraum benötigen. Zudem werden solche Kunststoffendkappen beim Wickeln der Blechpakete mit eingewickelt. Sie verbleiben also am Rotor oder Stator und verbrauchen dadurch zusätzlichen Bauraum. Weiterhin ergeben sich durch die Verwendung von Endscheiben Nachteile durch unterschiedliche Drahtlängen verschiedener Phasen, die sich auf die Leistungsdichte verschiedener Phasen einer Elektromaschine negativ auswirken.

In der DE 10 2014 009 799 A1 wird ein Verfahren mit einer Wickelhilfseinrichtung beschrieben, die reversibel angeordnet wird. Dabei wird die Wickelhilfseinrichtung über einen von dem Blechpaket umfassten Klemmmechanismus zur Bewicklung fixiert und nach der Bewicklung unter Lösen des Klemmmechanismus aus der Elektromaschine entfernt.

Diese Wickelhilfseinrichtung ist für mehrere Nuten ausgelegt, so dass die Wickelhilfseinrichtung jeweils nur für einen Nutabstand und eine feste Spulenweite verwendet werden kann.

In der US 3 184 173 A wird eine Wickelhilfseinrichtung beschrieben, bei der dem Wickelschema folgend auf bestimmten Polzähnen, über die die Drähte unmittelbar in die Nuten geführt werden, in axialer Verlängerung der Polzähne Halteelemente angeordnet werden. Die Halteelemente verhindern, dass beim Wickeln die Drähte von den Polzähnen rutschen. Nach dem Wickeln werden die Halteelemente wieder entfernt. Die Klemmringe, mit denen die Halteelemente am Rotor oder Stator fixiert werden, haben eine Anordnungsschablone, so dass jede Wickelhilfseinrichtung auf ein bestimmtes Wickelschema festgelegt ist.

STENZEL P ET AL: "Needle winding for distributed round-wire-windings without the use of insulation disks",2014 4TH INTERNATIONAL ELECTRIC DRIVES PRODUCTION CONFERENCE (EDPC), IEEE, 30. September 2014 (2014-09-30) offenbart eine Wickelhilfseinrichtung, wobei die Wickelhilfseinrichtung an den Stirnseiten des Stators mittels einer Klemmeinrichtung befestigt ist, wobei die Klemmeinrichtung in den Innenraum des Stators hinein verlängert ist. 1

Die Aufgabe der Erfindung ist es, eine Wickelhilfseinrichtung und ein damit verbundenes Wickelverfahren zu schaffen, welche keine Beschränkung hinsichtlich des Designs des Wickelschemas haben.

Gelöst wird diese Aufgabe durch ein Verfahren zur Bewicklung der Wickelzähne des Rotors oder Stators einer Elektromaschine gemäß den Merkmalen des Anspruchs 1 und einer Wickelhilfseinrichtung gemäß den Merkmalen des Anspruchs 5. Vorteilhafte Ausführungsformen finden sich in den jeweiligen Unteransprüchen.

Die Erfindung schlägt ein Verfahren zur Bewicklung der Wickelzähne der Rotors oder Stators einer Elektromaschine vor, bei welchem eine Wickelhilfseinrichtung auf die in Axialrichtung liegende Stirnseite des Rotors oder Stators aufgesetzt und mit dem Rotor oder Stator lösbar verbunden wird. Dabei werden die Wickelzähne und die Wickelhilfseinrichtung anschließend mit einem Wickeldraht, bevorzugt mit Nadelwickeltechnik, bewickelt, wobei der Wickeldraht im Bereich der Wickelhilfseinrichtung umgelenkt wird, und wobei die Wickelhilfseinrichtung nach dem vollständigen Bewickeln des Rotors oder Stators wieder entfernt wird. Bei dem erfindungsgemäßen Verfahren ist der Rotor oder Stator ein Außenrotor oder Außenstator. Die Wickelhilfseinrichtung umfasst eine Mehrzahl Drahtführungselemente, wobei jedem zu bewickelnden Wickelzahn ein Drahtführungselement zugeordnet ist und das Drahtführungselement einen Wickelzahnfortsetzungsabschnitt aufweist, der so ausgebildet ist, dass er den Wickelzahn in axialer Richtung fortsetzt. Dabei ist die Wickelhilfseinrichtung nicht in den Innenraum des Rotors oder Stators verlängert.

Dadurch, dass auf jedem Wickelzahn eine Wickelhilfseinrichtung angebracht wird, bleiben die Nuten zwischen den Wickelzähnen offen und jedes beliebige Wickelschema kann ohne Beschränkung durch die Wickelhilfseinrichtung umgesetzt werden. Durch das so erhaltene Verfahren können Rotoren oder Statoren ausgebildet werden, die gegenüber händisch gewickelten Rotoren oder Statoren eine andere Wickelkopfgeometrie aufweisen. Die erfindungsgemäßen maschinell gewickelten Rotoren oder Statoren zeichnen sich dadurch aus, dass der Wickeldraht im Bereich des Wickelkopfes mehr Kanten oder Ecken aufweist als dies bei händisch gewickelten Rotoren oder Statoren der Fall ist, bei denen wiederum der Wickeldraht im Bereich des Wickelkopfes Ellipsen- oder kreisförmige Konturen aufweist. Man erkennt also nach dem erfindungsgemäßen Verfahren gewickelte Rotoren oder Statoren an den von der Ellipsen- oder Kreisform deutlich abweichenden eckigen Geometrie der Drahtschlaufen des Wickelkopfes.

In einer bevorzugten Ausführungsform des Verfahrens wird ein Drahtführungselement verwendet, dessen Breite quer zur Axialrichtung kleiner oder gleich der Breite des zugehörigen Wickelzahns im Bereich von dessen in Radialrichtung freien Ende ist. Zum einen wird dabei die Breite der Nut zwischen den Wickelzähnen nicht durch die Wickelhilfseinrichtung eingeschränkt und die über die Wickelzähne in axialer Richtung hinausragenden Ösen der Wicklung sind schlanker.

In einer weiteren bevorzugten Ausführungsform des Verfahrens wird die Wickelhilfseinrichtung, insbesondere jedes Drahtführungselement, vor dem Bewickeln mittels wenigstens eines Stiftes oder Bolzens oder allgemein mittels eines Befestigungselements, zum Beispiel einer Befestigungsplatte, die zum Beispiel mit dem Rotor oder Stator verschraubt werden kann, am Rotor oder Stator befestigt. Mit einem Stift oder Bolzen oder Befestigungselement wird jedes Drahtführungselement, deren Summe die Wickelhilfseinrichtung ergibt, am Rotor oder Stator fixiert, damit die beim Wickeln auftretenden Querkräfte nicht zu einer Verschiebung einzelner Drahtführungselemente in Umfangsrichtung führt, was zu einer Störung des Wickelvorgangs führen könnte.

In einer besonders bevorzugten Ausführungsform des Verfahrens wird nach dem Bewickeln die Wickelhilfseinrichtung, insbesondere jedes Drahtführungselement, durch Entfernen des Stiftes oder Bolzens oder Befestigungselements vom Rotor oder Stator gelöst und anschließend entfernt. Die überstehenden Ösen der Wicklungen stehen frei und werden im Anschluss so angeordnet, dass das Produkt kompakter wird.

Die Erfindung betrifft auch eine in dem Verfahren verwendete Wickelhilfseinrichtung, die wenigstens ein Drahtführungselement mit wenigstens einem in einer Axialrichtung verlaufenden Wickelzahnfortsetzungsabschnitt zur stirnseitigen Anlage an den Wickelzahn eines Rotors oder Stators und zur axialen Fortsetzung des Wickelzahns, wobei der Wickelzahnfortsetzungsabschnitt auf einer ersten Seite des Drahtführungselements angeordnet ist. Weiter umfasst die Wickelhilfseinrichtung wenigstens einen, auf einer der ersten Seite des Drahtführungselements gegenüberliegend angeordneten zweiten Seite angeordneten Drahtumlenkungsabschnitt mit einer Drahtaufnahmevertiefung, deren Tiefenrichtung in einer Radialrichtung (R) senkrecht zur Axialrichtung (X) verläuft, wobei die Drahtaufnahmevertiefung in Radialrichtung nach außen geöffnet ist.

In einer bevorzugten Ausführungsform weist der Wickelzahnfortsetzungsabschnitt an seinem vom Anlageabschnitt entfernten Ende einen in Radialrichtung (R) nach außen und vom Anlageabschnitt weg schräg ansteigenden Abschnitt auf. Auf diese Weise ergibt sich mehr Spielraum bei der Drahtführung durch eine Drahtauslassdüse und die Wicklung kann präziser erfolgen.

Erfindungsgemäß sind zwischen dem Anlageabschnitt und dem dem Anlageabschnitt gegenüberliegenden Ende des Drahtführungselements eine Mehrzahl von Drahtumlenkungsabschnitten angeordnet.

In einer Alternative sind die Drahtumlenkabschnitte in Radialrichtung (R) zueinander versetzt angeordnet.

In einer Alternative ist der dem Anlageabschnitt nächste der Drahtumlenkabschnitte in Radialrichtung (R) am weitesten außen angeordnet und der radiale Versatz der Drahtumlenkabschnitte nimmt zum in Axialrichtung (X) freien Ende hin sukzessive ab.

Die Erfindung wird im Folgenden anhand der Figuren an einigen Ausführungsbeispielen näher erläutert.
- Figur 1 -: zeigt eine perspektivische Ansicht eines Rotors oder Stators mit aufgesetzten Wickelhilfseinrichtungen.
- Figur 2 -: zeigt ein Schnittbild der Anordnung in Figur 1.
- Figur 3 -: zeigt die Ausschnittvergrößerung A aus Figur 1.
- Figur 4 -: zeigt eine Befestigungsmöglichkeit der Wickelhilfseinrichtung an den Rotor oder Stator.
- Figur 5 -: zeigt eine perspektivische Ansicht eines Drahtführungselements.
- Figur 6 -: zeigt ein Schnittbild eines Drahtführungselements, das auf einem Wickelzahn aufgesetzt ist.
- Figur 7 -: ist eine Teilausschnittansicht entsprechend Figur 2 eines nach dem erfindungsgemäßen Verfahren fertig gewickelten Bauteils nach Entfernen des Wickelwerkzeuges.
- Figur 8 -: ist eine Teilausschnittansicht entsprechend Figur 2 eines nach einem herkömmlichen manuellen Verfahren fertig gewickelten Bauteils nach Entfernen des Wickelwerkzeuges.

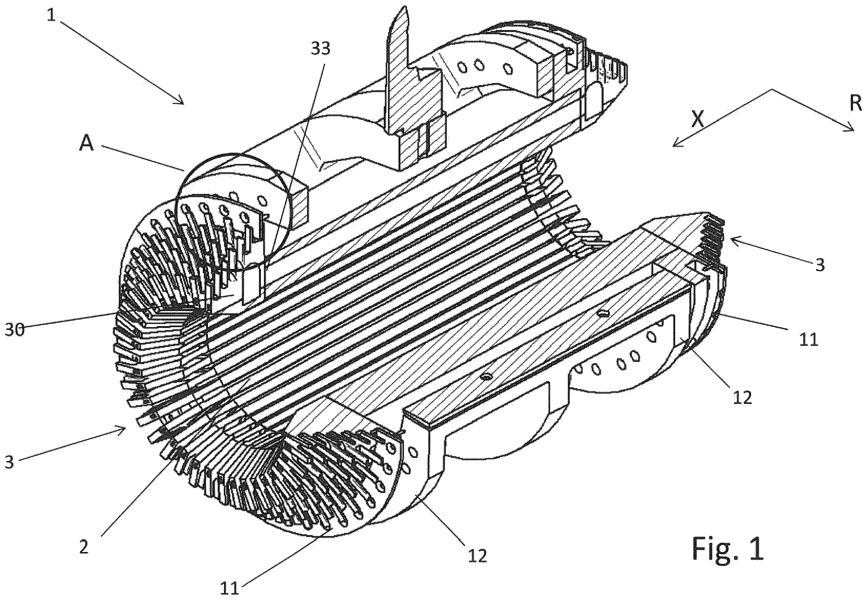

Figur 1 zeigt eine perspektivische Ansicht eines Rotors oder Stators 1, der zur Veranschaulichung zu einem Viertel offen dargestellt ist. Der ungewickelte Rohling setzt sich zusammen aus einem Ring von Wickelzähnen 2, zwischen denen jeweils die Wickelnuten liegen. An den Enden des Rotors oder Stators 1 sind in axialer Richtung (X) Wickelhilfseinrichtungen 3 aufgesetzt, wobei die einzelnen Drahtführungselemente 30 mit dem Anlageabschnitt 33 an dem jeweiligen Wickelzahn 2 anliegen. Fixiert wird in diesem Ausführungsbeispiel die Wickelhilfseinrichtung 3 u.a. durch ein hier als Sicherungsring 11 ausgebildetes Befestigungselement, das im gezeigten Beispiel an einem Aufnahmering 10 (im linken Teil der Figur nicht gezeigt) festgeschraubt wird. Die jeweiligen Aufnahmeringe 10 werden an einem Tragegestell 12 befestigt und sichern den Sitz der Wickelhilfseinrichtung 3.

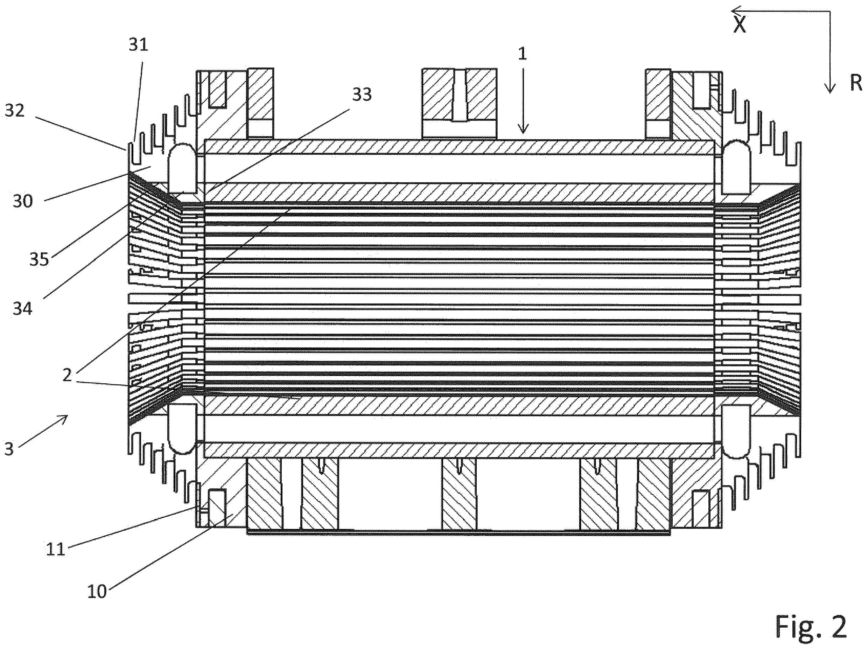

Das Schnittbild in Figur 2 zeigt einige Details der Anordnung aus Figur 1 deutlicher. An den axialen Enden des Rotors oder Stators 1 sind die Wickelhilfseinrichtungen 3 vorgesehen, welche mindestens ein Drahtführungselement 30 umfassen.

Das Drahtführungselement 30 weist einen Wickelzahnfortsetzungsabschnitt 34 mit einem Anlageabschnitt 33, mit dem das Drahtführungselement 30 an dem Wickelzahn 2 anliegt, und einen schräg ansteigenden Abschnitt 35 auf, welcher an dem in Axialrichtung X außen liegenden Teil angeordnet ist. Weiterhin sind an den Drahtführungselementen 30 in Radialrichtung R außen liegend eine Reihe von Drahtumlenkabschnitten 31, 32 angeordnet. Diese Drahtumlenkabschnitte 31, 32 umfassen Drahtaufnahmevertiefungen 31 und an diese begrenzende Stege 32. Die Drahtumlenkabschnitte 31, 32 sind in Radialrichtung R zueinander versetzt angeordnet, wobei der radiale Versatz gegenüber dem Wickelzahn 2 in axialer Richtung vom Rotor oder Stator 1 weg sukzessive abnimmt.

Die Wickelhilfseinrichtung 3 ist bevorzugt durch einen umlaufenden Sicherungsring 11 an einem Aufnahmering 10 befestigt und so gegen Verschiebungen gesichert. Es ist nicht notwendig, dass der Sicherungsring 11 einstückig ausgeführt ist. Es ist durchaus denkbar, dass der Sicherungsring 11 aus mehreren Kreissegmenten zusammengesetzt ist, was die Montage und Demontage des Sicherungsrings 12 erleichtern kann.

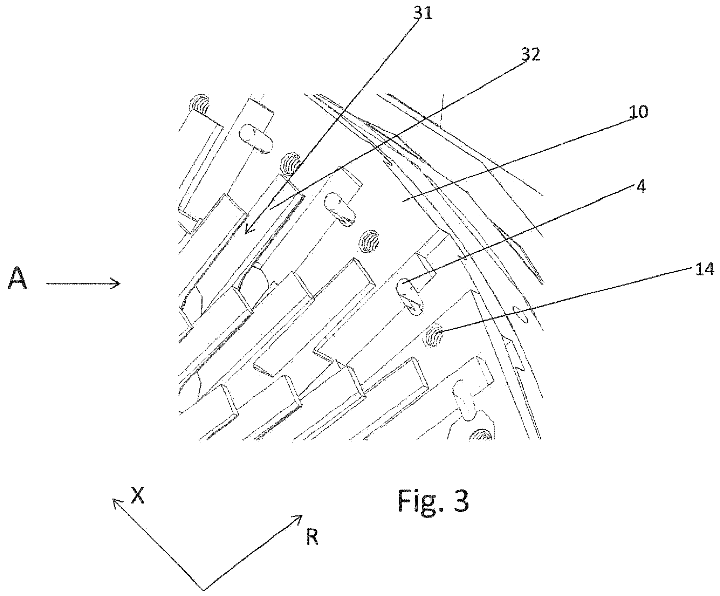

Der in Figur 1 mit A gekennzeichnete Ausschnitt ist in Figur 3 vergrößert dargestellt. Eine Reihe von Drahtführungselementen 30, von denen lediglich einige Drahtumlenkabschnitte 31, 32 mit den Drahtaufnahmevertiefungen 31 und den dazwischen angeordneten Stegen 32 gezeigt werden, sind auf einem Aufnahmering 10 am Rotor oder Stator 1 angeordnet. Zur Lagefixierung der Drahtführungselemente 30 sind in dem Aufnahmering 10 Stifte oder Bolzen 4 eingelassen, an denen die Drahtführungselemente 30 anliegen.

Hierzu kann an dem axial am weitesten innen liegenden Steg 32 eine Anlagenut 36 (in der Figur nicht gezeigt) eingebracht werden. Gesichert werden kann diese Anordnung mit einem Sicherungsring 11 (hier nicht gezeigt), der mit Schrauben, die in die Gewindelöcher 14 des Aufnahmerings 10 geschraubt werden, fixiert wird.

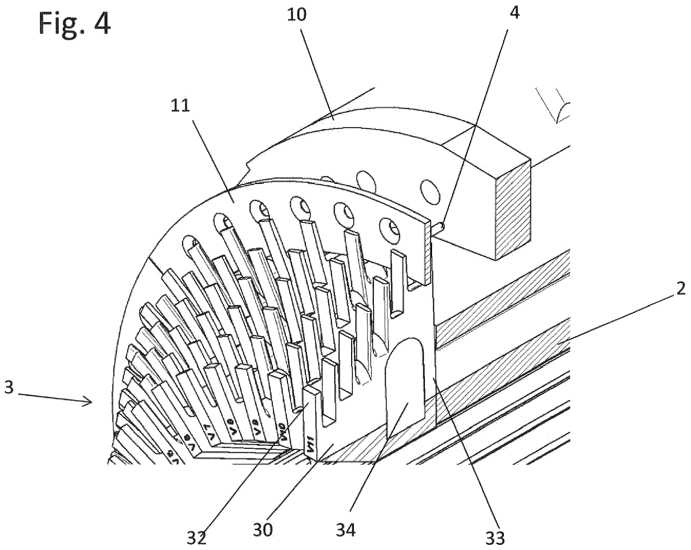

Die Figur 4 zeigt eine an den Rotor oder Stator 1 angelegte Wickelhilfseinrichtung 3, welche mehrere Drahtführungselemente 3 umfasst. Auf dem dem Rotor oder Stator 1 nächstliegenden Steg 32 der Drahtführungselemente 30 liegt der Sicherungsring 11 mit einer Reihe von Bohrungen 13 auf dem Aufnahmering 10 auf, der die Stifte oder Bolzen 4 aufnimmt und Gewindelöcher 14 aufweist. Mittels Schrauben, die durch die Bohrungen 13 hindurch in die hiermit fluchtenden Gewindelöcher 14 geschraubt werden, wird der Sicherungsring 11 und damit die Wickelhilfseinrichtung 3 fixiert.

Die Wickelhilfseinrichtung 3 ist so ausgelegt, dass sie nach dem Bewickeln zum Innenraum des Rotors oder Stators 1 hin herausgenommen werden kann, indem man die Drahtführungselemente 30 so entfernt.

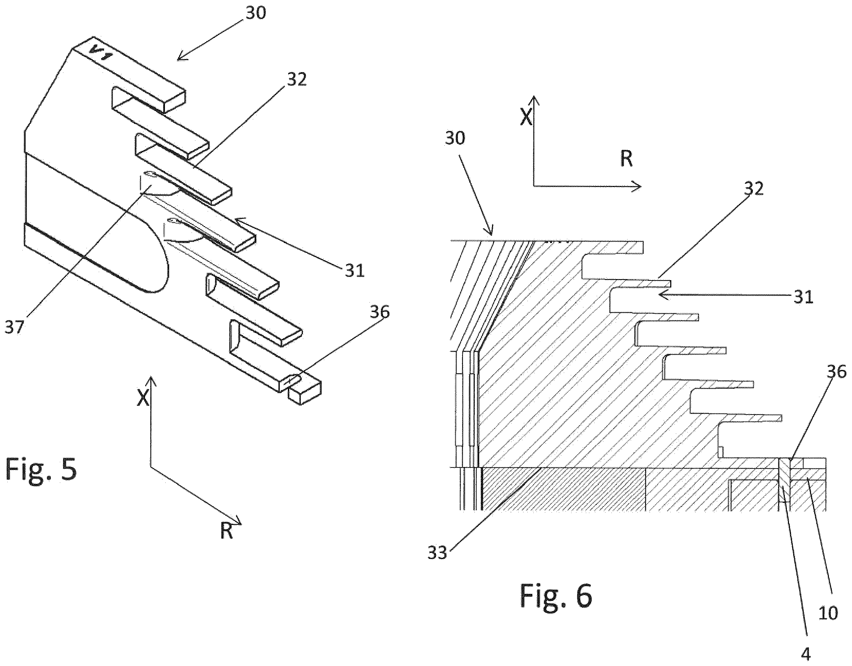

Figur 5 zeigt eine Ausführung eines Drahtführungselements 30 mit einer Reihe von Drahtumlenkabschnitten 31, 32, bei der die radiale Verschiebung der Drahtaufnahmevertiefungen 31 sich von unten nach oben (in X-Richtung) sukzessive verringert. Die Verringerung wird so gewählt, dass die Drahtlänge der Wicklungen immer gleich bleibt. In dem unteren Steg 32 des Drahtführungselements 30 ist eine Anlagenut 36 eingebracht, mit der das Drahtführungselement 30 an dem Stift oder Bolzen 4 fixiert wird. Der Boden 37 der Drahtaufnahmevertiefungen 31 kann eben ausgebildet sein. Allerdings kann dieser Boden 37 in einer bevorzugten Ausführungsform auch gekrümmt bzw. gewölbt sein. Dadurch kann sich der Draht beim Wickeln besser an die Bodenform der Drahtaufnahmevertiefung 31 anschmiegen und die Zugkraft beim Wickeln gegebenenfalls verringert werden.

Die Figur 6 zeigt ein Schnittbild eines Drahtführungselements 30, das mit dem Anlageabschnitt 33 auf einem Rotor oder Stator 1 aufliegt. In dem Aufnahmering 10 ist ein Stift oder Bolzen 4 eingefügt, der in die Anlagenut 36 des Drahtführungselements 30 eingreift. Der Sicherungsring mit der Verschraubung ist hier aus Gründen der Übersichtlichkeit nicht gezeigt.

Mit der Wickelhilfseinrichtung 3 lässt sich ein Rotor oder Stator 1 kompakter wickeln, da die Wickelhilfseinrichtung 3 nach dem Wickeln wieder entfernt werden kann und so das notwendige Volumen an den axialen Enden von Rotor oder Stator 1 im Bereich der Wickelköpfe verringert. Der modulare Aufbau der Wickelhilfseinrichtung 3 macht es möglich, diese bei verschiedenen Gegebenheiten einzusetzen und nicht allein für einen Rotor- bzw. Statortyp. Das macht die Wickelverfahren kostengünstiger und die Lagerhaltung einfacher.

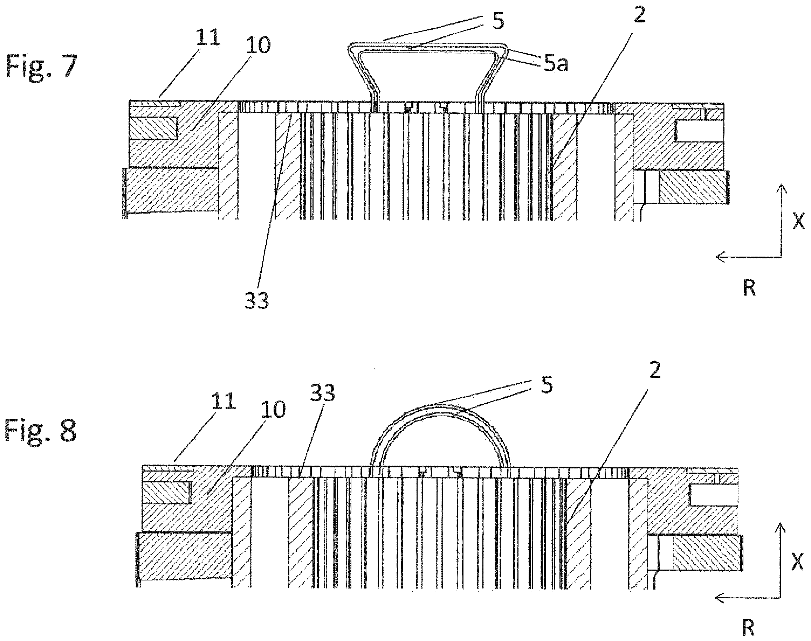

In den Figuren 7 und 8 sind die Wickelköpfe nach Entfernen des Wickelwerkzeuges nach dem erfindungsgemäßen Verfahren (Figur 7) und dem herkömmlichen manuellen Verfahren (Figur 8) gegenübergestellt. Zu erkennen ist in beiden Fällen eine Drahtschlaufe 5, welche einen Teil der Stirnseite des bewickelten Körpers überspannt. Bei dem erfindungsgemäßen Verfahren bleibt nach Entfernen des Wickelwerkzeugs eine Drahtschlaufe 5 zurück, welche deutlich erkennbare Kanten oder Ecken 5a aufweist. Demgegenüber liefert das herkömmliche Verfahren gem. Figur 8 einen runden Wickelkopf der jeweiligen Drahtschlaufe 5 ohne Ecken oder Kanten. Aufgrund dessen lässt sich ein Erzeugnis, welches nach dem erfindungsgemäßen Verfahren gewickelt wurde, deutlich an der Geometrie des Winkelkopfes erkennen.

### Bezugszeichenliste

- 1: Rotor oder Stator
- 2: Wickelzähne
- 3: Wickelhilfseinrichtung
- 4: Stift oder Bolzen
- 10: Aufnahmering
- 11: Sicherungsring
- 12: Tragegestell
- 13: Bohrung
- 14: Gewindeloch
- 30: Drahtführungselement
- 31: Drahtaufnahmevertiefung
- 32: Steg
- 31, 32: Drahtumlenkabschnitt
- 33: Anlageabschnitt
- 34: Wickelzahnfortsetzungsabschnitt
- 35: schräg ansteigender Abschnitt
- 36: Anlagenut
- 37: Boden der Drahtaufnahmevertiefung

- R: Radialrichtung
- X: Axialrichtung

## Patentansprüche

1. Verfahren zur Bewicklung der Wickelzähne (2) des Rotors oder Stators (1) einer Elektromaschine, bei welchem eine Wickelhilfseinrichtung (3) auf wenigstens eine in Axialrichtung (X) liegende Stirnseite des Rotors oder Stators (1) aufgesetzt und mit dem Rotor oder Stator (1) lösbar verbunden wird, wobei die Wickelzähne (2) und die Wickelhilfseinrichtung (3) anschließend mit einem Wickeldraht, bevorzugt mit Nadelwickeltechnik, bewickelt werden, wobei der Wickeldraht im Bereich der Wickelhilfseinrichtung (3) umgelenkt wird, und wobei die Wickelhilfseinrichtung (3) nach dem Bewickeln des Rotors oder Stators wieder entfernt wird, wobei die Wickelhilfseinrichtung (3) eine Mehrzahl Drahtführungselemente (30) umfasst, wobei jedem zu bewickelnden Wickelzahn (2) ein Drahtführungselement (30) zugeordnet ist,
wobei der Rotor oder Stator (1) ein Außenrotor oder Außenstator ist und wobei das Drahtführungselement (30) einen Wickelzahnfortsetzungsabschnitt (34) aufweist, der so ausgebildet ist, dass er den Wickelzahn (2) in axialer Richtung (X) fortsetzt, wobei die Wickelhilfseinrichtung (3) dabei nicht in den Innenraum des Rotors oder Stators (1) hinein verlängert ist.

2. Verfahren nach Anspruch 1,
**dadurch gekennzeichnet,**
**dass** ein Drahtführungselement (30) verwendet wird, dessen Breite quer zur Axialrichtung (X) kleiner oder gleich der Breite des zugehörigen Wickelzahns (2) im Bereich von dessen in Radialrichtung (R) freien Ende ist.

3. Verfahren nach Anspruch 1 oder 2,
**dadurch gekennzeichnet,**
**dass** die Wickelhilfseinrichtung (3), insbesondere jedes Drahtführungselement (30), vor dem Bewickeln mittels wenigstens eines Stiftes oder Bolzen (4) oder Befestigungselements, insbesondere Klemmelements, am Rotor oder Stator (1) befestigt wird.

4. Verfahren nach Anspruch 3,
**dadurch gekennzeichnet,**
**dass** die Wickelhilfseinrichtung (3), insbesondere jedes Drahtführungselement (30), nach dem Bewickeln durch Entfernen des Stiftes oder Bolzens (4) oder Befestigungselements vom Rotor oder Stator (1) entfern wird.

5. Wickelhilfseinrichtung (3), insbesondere zur Verwendung nach einem Verfahren der vorigen Ansprüche, umfassend wenigstens ein Drahtführungselement (30), mit wenigstens einem in einer Axialrichtung (X) verlaufenden Wickelzahnfortsetzungsabschnitt (34) zur stirnseitigen Anlage an den Wickelzahn (2) eines Rotors oder Stators (1) und zur axialen Fortsetzung des Wickelzahns (2), wobei der Wickelzahnfortsetzungsabschnitt (34) auf einer ersten, in direkter axialer Verlängerung des Wickelzahnes (2) und radial innerhalb des Drahtführungselements (30) angeordneten Seite des Drahtführungselements (30) angeordnet ist und wenigstens einem, auf einer der ersten Seite des Drahtführungselements (30) radial nach außen gegenüberliegend angeordneten zweiten Seite des Drahtführungselements (30) angeordneten Drahtumlenkabschnitt (31, 32) mit einer zwischen Stegen (32) befindlichen Drahtaufnahmevertiefung (31), deren Tiefenrichtung in einer Radialrichtung (R) senkrecht zur Axialrichtung (X) verläuft, wobei die Drahtaufnahmevertiefung (31) in Radialrichtung nach außen geöffnet ist, sowie mit einem Anlageabschnitt (33) zur Anlage an die Stirnseite eines Rotors oder Stators (1),
wobei in dem unteren Steg (32) des Drahtführungselements (30), der an dem Rotor oder Stator (1) anliegt, eine Anlagenut (36) eingebracht ist, mit der das Drahtführungselement (30) an einen Stift oder Bolzen (4) fixiert und die Wickelhilfseinrichtung (3) nach dem Wickeln wieder entfernt werden kann, wobei zwischen dem Anlagenabschnitt (33) und dem dem Anlagenabschnitt gegenüber liegenden Ende des Drahtführungselements (30) eine Mehrzahl Drahtumlenkungsabschnitte (31, 32) angeordnet sind und wobei
die Drahtumlenkabschnitte (31, 32) in Radialrichtung (R) zueinander versetzt angeordnet sind oder der dem Anlagenabschnitt (33) nächste der Drahtumlenkungsabschnitte (31, 32) in Radialrichtung (R) am weitesten außen angeordnet ist und der radiale Versatz zum in Axialrichtung (X) freien Ende des Drahtführungselements sukzessive abnimmt.

6. Wickelhilfseinrichtung (3) nach Anspruch 5,
**dadurch gekennzeichnet,**
**dass** der Wickelzahnfortsetzungsabschnitt (34) an seinem vom Anlageabschnitt (33) entfernten Ende einen in Radialrichtung (R) nach außen und vom Anlageabschnitt weg schräg ansteigenden Abschnitt (35) aufweist.

## Claims

1. Method for winding the winding teeth (2) of the rotor or stator (1) of an electric machine, in which method a winding aid device (3) is placed onto at least one end face of the rotor or stator (1), which face is located in the axial direction (X), and detachably connected to the rotor or stator (1), wherein the winding teeth (2) and the winding aid device (3) are then wound with a winding wire, preferably using needle winding technology, wherein the winding wire is deflected in the region of the winding aid device (3), and wherein the winding aid device (3) is removed after the rotor or stator has been wound, wherein the winding aid device (3) comprises a plurality of wire guide elements (30), wherein each winding tooth (2) to be wound is assigned a wire guide element (30), wherein the rotor or stator (1) is an external rotor or external stator and wherein the wire guide element (30) has a winding tooth continuation portion (34) which is designed such that it continues the winding tooth (2) in the axial direction (X), wherein the winding aid device (3) is not thereby extended into the interior of the rotor or stator (1).

2. Method according to claim 1, **characterized in that** a wire guide element (30) is used of which the width, transversely to the axial direction (X), is smaller than or equal to the width of the associated winding tooth (2) in the region of the free end thereof in the radial direction (R).

3. Method according to claim 1 or 2, **characterized in that** the winding aid device (3), in particular each wire guide element (30), is secured to the rotor or stator (1) by means of at least one pin or bolt (4) or securing element, in particular clamping element, before winding.

4. Method according to claim 3, **characterized in that** the winding aid device (3), in particular each wire guide element (30), is removed from the rotor or stator (1) after winding by removing the pin or bolt (4) or securing element.

5. Winding aid device (3), in particular for use according to a method from the preceding claims, comprising at least one wire guide element (30) having at least one winding tooth continuation portion (34) that extends in an axial direction (X) for end-face contact with the winding tooth (2) of a rotor or stator (1) and for axial continuation of the winding tooth (2), wherein the winding tooth continuation portion (34) is arranged on a first side of the wire guide element (30), which side is arranged in a direct axial extension of the winding tooth (2) and radially inside the wire guide element (30), said element also having at least one wire deflecting portion (31, 32) which is arranged on a second side of the wire guide element (30) that is radially outwardly opposite the first side of the wire guide element (30) and which has a wire-receiving recess (31) located between ribs (32), the depth direction of which recess extends perpendicularly to the axial direction (X) in a radial direction (R), wherein the wire-receiving recess (31) is outwardly open in the radial direction, said element also having a contact portion (33) for contact with the end face of a rotor or stator (1), wherein a contact groove (36) is created in the lower rib (32) of the wire guide element (30), which rib contacts the rotor or stator (1), by means of which groove the wire guide element (30) fastens to a pin or bolt (4) and the winding aid device (3) can be removed after winding, wherein a plurality of wire deflecting portions (31, 32) are arranged between the contact portion (33) and the end of the wire guide element (30) opposite the contact portion, and wherein the wire deflecting portions (31, 32) are arranged so as to be mutually offset in the radial direction (R) or the wire deflecting portion (31, 32) closest to the contact portion (33) is arranged furthest outward in the radial direction (R) and the radial offset to the free end of the wire guide element in the axial direction (X) successively decreases.

6. Winding aid device (3) according to claim 5, **characterized in that** the winding tooth continuation portion (34) has, at the end thereof which is remote from the contact portion (33), a portion (35) which rises obliquely outward in the radial direction (R) and away from the contact portion.

## Revendications

1. Procédé d'enroulement des dents d'enroulement (2) du rotor (1) ou du stator (1) d'une machine électrique, selon lequel un dispositif (3) d'aide à l'enroulement est placé sur au moins un côté frontal du rotor (1) ou du stator (1) orienté en direction axiale (X), et est relié de manière amovible au rotor (1) ou au stator (1), les dents d'enroulement (2) et le dispositif (3) d'aide à l'enroulement étant ensuite enroulés au moyen d'un fil d'enroulement, de préférence au moyen d'une technique d'enroulement d'aiguille, le fil d'enroulement étant dévié dans la zone du dispositif (3) d'aide à l'enroulement, et le dispositif (3) d'aide à l'enroulement étant retiré après l'enroulement du rotor ou du stator, le dispositif (3) d'aide à l'enroulement comprenant une pluralité d'éléments de guidage de fil (30), un élément de guidage de fil (30) étant associé à chaque dent d'enroulement (2) à enrouler,
le rotor ou le stator (1) étant un rotor extérieur ou un stator extérieur, et l'élément de guidage de fil (30) présentant une partie de prolongement de dent d'enroulement (34) qui est conçue de manière à prolonger la dent d'enroulement (2) dans la direction axiale (X), le dispositif (3) d'aide à l'enroulement ne s'étendant pas dans l'espace intérieur du rotor (1) ou du stator (1).

2. Procédé selon la revendication 1, **caractérisé en ce qu'**un élément de guidage de fil (30) est utilisé, dont la largeur transversalement à la direction axiale (X) est inférieure ou égale à la largeur de la dent d'enroulement correspondante (2) dans la zone de son extrémité libre dans la direction radiale (R).

3. Procédé selon la revendication 1 ou 2, **caractérisé en ce que** le dispositif (3) d'aide à l'enroulement, en particulier chaque élément de guidage de fil (30), est fixé au rotor (1) ou au stator (1) avant l'enroulement au moyen d'au moins une goupille (4) ou un boulon (4) ou un élément de fixation, en particulier un élément de serrage.

4. Procédé selon la revendication 3, **caractérisé en ce que** le dispositif (3) d'aide à l'enroulement, en particulier chaque élément de guidage de fil (30), est retiré après l'enroulement en retirant la goupille (4) ou le boulon (4) ou l'élément de fixation du rotor (1) ou du stator (1).

5. Dispositif (3) d'aide à l'enroulement, en particulier permettant l'utilisation selon un procédé des revendications précédentes, comprenant au moins un élément de guidage de fil (30) comportant au moins une partie de prolongement de dent d'enroulement (34) se poursuivant dans une direction axiale (X), permettant l'appui frontal contre la dent d'enroulement (2) d'un rotor (1) ou d'un stator (1) et permettant le prolongement axial de la dent d'enroulement (2), la partie de prolongement de dent d'enroulement (34) étant disposée sur un premier côté de l'élément de guidage de fil (30) disposé en extension axiale directe de la dent d'enroulement (2) et radialement à l'intérieur de l'élément de guidage de fil (30), et sur au moins une partie de déviation de fil (31, 32) disposée sur un second côté de l'élément de guidage de fil (30), lequel second côté est opposé radialement vers l'extérieur au premier côté de l'élément de guidage de fil (30), la partie de déviation de fil comportant un évidement de réception de fil (31) situé entre des entretoises (32), la direction de profondeur de l'évidement de réception de fil se poursuivant dans une direction radiale (R) de façon perpendiculaire à la direction axiale (X), l'évidement de réception de fil (31) étant ouvert dans la direction radiale vers l'extérieur, le dispositif d'aide à l'enroulement comportant également une partie d'appui (33) permettant l'appui sur le côté frontal d'un rotor (1) ou d'un stator (1),
une rainure d'appui (36) étant réalisée dans l'entretoise inférieure (32) de l'élément de guidage de fil (30) appuyé sur le rotor (1) ou le stator (1), la rainure d'appui permettant de fixer l'élément de guidage de fil (30) à une goupille (4) ou un boulon (4) et de pouvoir retirer le dispositif (3) d'aide à l'enroulement après l'enroulement, une pluralité de parties de déviation de fil (31, 32) étant disposées entre la partie d'appui (33) et l'extrémité de l'élément de guidage de fil (30) opposée à la partie d'appui,
et les parties de déviation de fil (31, 32) étant disposées de façon décalée les unes des autres dans la direction radiale (R), ou les parties de déviation de fil (31, 32) les plus proches de la partie d'appui (33) étant disposées le plus vers l'extérieur dans la direction radiale (R), et le décalage radial par rapport à l'extrémité libre de l'élément de guidage de fil dans la direction axiale (X) diminuant progressivement.

6. Dispositif (3) d'aide à l'enroulement selon la revendication 5, **caractérisé en ce que** la partie de prolongement de dent d'enroulement (34) présente, à son extrémité éloignée de la partie d'appui (33), une partie (35) montant obliquement vers l'extérieur dans la direction radiale (R) et s'éloignant de la partie d'appui.
